Europäisches Patentamt

European Patent Office

Office européen des brevets

(11) Publication number: **0 457 296 A2**

# EUROPEAN PATENT APPLICATION

(21) Application number: **91107846.7**

(22) Date of filing: **15.05.91**

(51) Int. Cl.⁵: **B60G 3/20**

(30) Priority: **16.05.90 JP 126307/90**

(43) Date of publication of application:
**21.11.91 Bulletin 91/47**

(84) Designated Contracting States:
**DE FR GB**

(71) Applicant: **TOYOTA JIDOSHA KABUSHIKI KAISHA**
**1, Toyota-cho Toyota-shi**
**Aichi-ken(JP)**

(72) Inventor: **Higuchi, Akira**
**196-1, Minamiisshiki, Nagaizumi-cho**
**Suntou-gun, Shizuoka-ken(JP)**
Inventor: **Yano, Toshihide**
**1020-6, Sano, Susono-shi**
**Shizuoka-ken(JP)**

(74) Representative: **Tiedtke, Harro, Dipl.-Ing. et al**
**Patentanwaltsbüro Tiedtke-Bühling-Kinne-**
**Grupe-Pellmann-Grams Bavariaring 4**
**Postfach 20 24 03**
**W-8000 München 2(DE)**

(54) **Double arm suspension for a steered and driven vehicle wheel.**

(57) A double joint type suspension for a pair of steering/driving vehicle wheels in a four wheel vehicle wherein a carrier for rotatably supporting the vehicle wheel is supported by a front arm and a rear arm each extending substantially horizontally from an inboard end thereof pivotably connected with a body of the vehicle so as to be pivotable forward and rearward relative to the vehicle body up to an outboard end thereof pivotably connected with the carrier so as to be pivotable forward and rearward relative to the carrier, the front and rear arms extending so as to be closer to one another at the outboard end thereof than at said inboard end thereof so that a longitudinal axis thereof intersects one another on the outboard end side thereof so as thereby to define a king pin point at the point of intersection, wherein a four link geometry by the front and rear arms, the carrier and the vehicle body is so arranged that the king pin point shifts more inboard from a central plane of the vehicle wheel at the inside of turning than at the outside of turning for a same increase of steering angle.

FIG. 3

## Background of the Invention

### Field of the Invention

The present invention relates to a suspension in a vehicle such as an automobile, and more particularly, to a double joint type suspension for a steering/driving vehicle wheel such as a front steering vehicle wheel in a front drive vehicle.

### Description of the Prior Art

A double joint type suspension for a steering vehicle wheel in a vehicle is known as disclosed, for example, in Japanese Patent Publication 52-9889, in which a carrier for rotatably supporting the vehicle wheelis supported by a front arm and a rear arm each extending substantially horizontally from an inboard end thereof pivotably connected with a body of the vehicle so as to be pivotable forward and rearward relative to said vehicle body up to an outboard end thereof pivotably connected with said carrier so as to be pivotable forward and rearward relative to said carrier, said front and rear arms extending so as to be closer to one another at said outboard end thereof than at said inboard end thereof so that a longitudinal axis thereof intersects one another on the outboard end side thereof so as thereby to define a king pin point at the point of intersection.

In such a double joint type steering suspension, when the suspension is steered for a turning of the vehicle, the point of intersection of the axes of the two arms, i.e. the king pin point, shifts substantially forward of the vehicle relative to the vehicle wheel at the inside of the turning so as thereby substantially to increase the caster trail, while the king pin point shifts substantially rearward of the vehicle relative to the vehicle wheel at the outside of the turning so as thereby substantially to decrease the cater trail which often turns into negative.

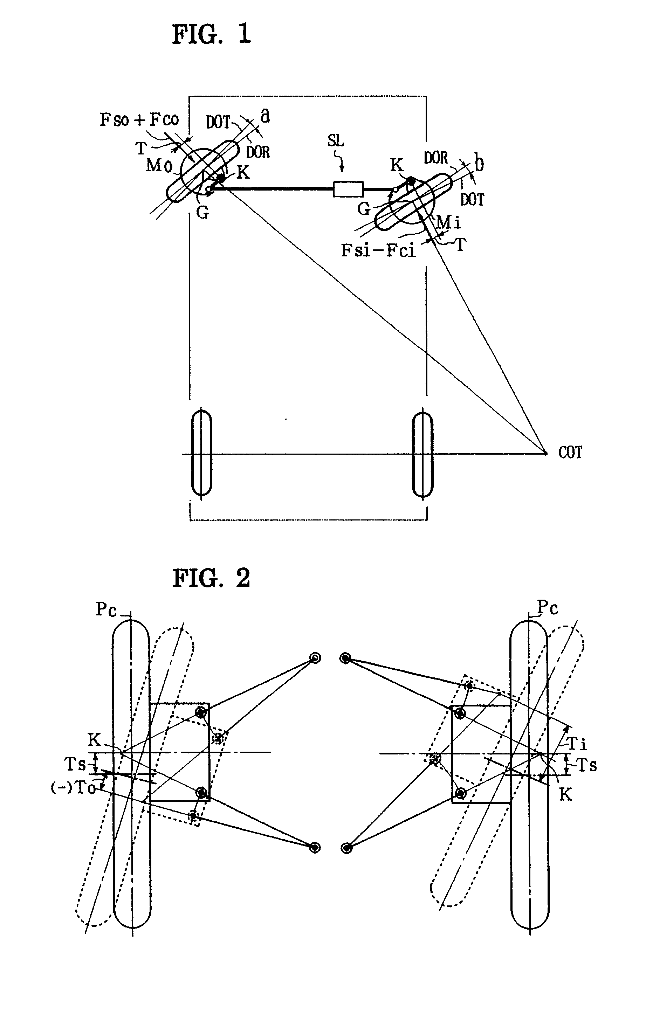

In more detail, referring to Fig. 1, in a conventional pivot type king pin suspension diagrammatically shown in Fig. 1, the caster trail T, that is the distance from the king pin point K rearward to the ground contact point G of the vehicle wheel or the position of the axis of the vehicle wheel as viewed in a plan view of the vehicle, does not change according to the steering turns of the steering vehicle wheels by a steering mechanism such as schematically shown by SL. In a turning of the vehicle, according to the Ackerman's geometry, the vehicle wheels at the outside and the inside of the turning should each ideologically be oriented so that a straight line perpendicular to its orientation of turning intersects one another on an extension of a common axis of the rear vehicle wheels where they define a center of turning COT.

However, when the vehicle makes a turning at a relatively high speed while inducing a relatively large centrifugal force, since the steering vehicle wheel at the outside of turning is imposed much higher load than the steering vehicle wheel at the inside of turning due to the swinging of the vehicle body toward the outside of turning it is the generally real geometry that when the vehicle wheel at the outside of turning is more steered than its direction of turning (DOT) so that its direction of rolling (DOR) expands an angle "a" relative to the direction of turning at the inside of turning, the vehicle wheel at the inside of turning is still less steered than its direction of turning so that its direction of rolling expands an angle "b" at the outside of turning as analysed based upon the position of the COT around which the vehicle is really turning.

Under such turning conditions the steering vehicle wheel at the outside of turning is exerted with a such force from the ground toward the inside of turning as the sum of Fso due to the oversteering of DOR from DOT by the angle "a" and Fso due to the centrifugal force induced in the vehicle body (including of course the vehicle wheel itself and its suspension), while the steering vehicle wheel at the inside of turning is exerted with such a force from the ground toward the outside of turning as the balance of Fsi due to the understeering of DOR from DOT by the angle "b" and Fsi due to the centrifugal force induced in the vehicle body. The force Fso + Fco generates with the caster trail T a moment Mo in the steering vehicle wheel at the outside of turning in a direction of returning it toward the neutral position, while the force Fsi-Fci, if it is positive, generates with the caster trail T a moment Mi in the steering vehicle wheel at the inside of turning in a direction of more steering it for the turning. The force Fso + Fco is generally substantially greater than the force Fsi-Fci, because Fsi is great only when Fco is great.

However, in the above-mentioned double joint type steering suspension, as shown in Fig. 2, the king pin point K shifts rapidly rearward at the outside of turning as the steering angle increases so that the caster trail having a value such as Ts at the neutral position of steering is turned into a negative value such as (-)To at an early stage of steering. When the caster trail turns into negative at the steering vehicle wheel at the outside of turning, the force Fso + Fco generates a moment in the vehicle wheel in a direction of more steering the vehicle wheel. This is not desirable in view of the stability of the steering system. Further, since the caster trail increases substantially at the inside of turning as from Ts to Ti, if the force Fsi-Fci is positive, even if its absolute value is small, this also affects the stability of the steering system in a negative manner.

**Summary of the Invention**

In consideration of the above-mentioned performance of the double joint type suspension with regard to the change of the caster trail according to the steering operation on the one hand, and the above-mentioned performance of the front steering four wheel vehicle with regard to the steering angle of a pair of steering vehicle wheels in actual running on the other hand, and further, in consideration of a certain performance particularly available when the front steering vehicle wheels are the driving vehicle wheels, it is the object of the present invention to provide an improvement of the double joint type suspension for the front steering/driving vehicle wheel in the four wheel vehicle in the steering performance, particularly the stability thereof.

According to the present invention the above-mentioned object is accomplished by a suspension for a pair of steering/driving vehicle wheels in a four wheel vehicle, comprising a pair of double joint type steering suspensions each including a carrier for rotatably supporting one of said pair of vehicle wheels, a front arm and a rear arm, said front and rear arms each extending substantially horizontally from an inboard end thereof pivotably connected with a body of the vehicle so as to be pivotable forward and rearward relative to said vehicle body up to an outboard end thereof pivotably connected with said carrier so as to be pivotable forward and rearward relative to said carrier, said front and rear arms in each said pair extending so as to be closer to one another at said outboard end thereof than at said inboard end thereof so that a longitudinal axis thereof intersects one another on the outboard end side thereof so as thereby to define a king pin point at the point of intersection, wherein a four link geometry by said front and rear arms, said carrier and said vehicle body is so arranged that said king pin point shifts more inboard from a central plane of said vehicle wheel at the inside of turning than at the outside of turning for a same increase of steering angle.

The distance of the king pin point as shifted inboard from the central plane of the vehicle wheel provides an arm length for a moment being generated in the vehicle wheel by the driving force which the vehicle wheel, when it is a steering/driving vehicle wheel, exhibits under the reaction exerted by the ground, said moment having an effect of biasing the vehicle wheel inboard so that said moment generated in the vehicle wheel at the inside of turning contributes to the stability of the steering system, while said moment generated in the vehicle wheel at the outside of turning acts against the stability of the steering system. When the front and rear arms are arranged to be symmetrical about a transverse axis bisecting the V-shaped arrangement of the front and rear arms as viewed in a plan view of the vehicle as in the conventional structure shown in Fig. 2, the king pin point K shifts inboard relative to the central plane Pc at the same rate for both the outside and inside steering according to the increase of steering angle. (In Fig. 2, the king pin point K at the inside of turning is more shifted inboard from the central plane Pc than at the outside of turning because the vehicle wheel at the inside of turning is more steered than the vehicle wheel at the outside of turning.) Since the vehicle wheel at the inside of turning is generally more steered than the vehicle wheel at the outside of turning, the balance of said moments at the inside and outside of turning is generally desirable for the stability of the steering system.

Such a balance of moment desirable for the stability of the steering system is substantially augmented by the inboard displacement of the king pin point from the central plane of the vehicle wheel being increased more at the inside of turning than at the outside of turning for a same increase of steering angle according to the present invention so that the above-mentioned drawback for the stability of the steering system due to the rearward shifting of the king pin point at the outside of turning can be much more compensated for.

The king pin point can be shifted more inboard from said central plane of the vehicle wheel at the inside of turning than at the outside of turning for a same increase of steering angle by the distance along the longitudinal axis of said front arm between the king pin point and a point of pivoting in the connection of said outboard end of said front arm with said carrier being made smaller than the distance along the longitudinal axis of said rear arm between the king pin point and a point of pivoting in the connection of said outboard end of said rear arm with said carrier when the vehicle wheel is at a neutral position in steering.

According to an embodiment of the present invention, the difference between said two distances may be substantially due to a difference between a first distance of said pivot point of said outboard end of said front arm from said central plane of the vehicle wheel and a second distance of said pivot point of said outboard end of said rear arm from said central plane of the vehicle wheel, said first distance being smaller than said second distance.

According to another embodiment of the present invention, the difference in said two distances may be substantially due to a difference between a length of said front arm from said inboard end thereof to said outboard end thereof and a length of said rear arm from said inboard end thereof to said outboard end thereof, said length of said front arm being smaller than said length of said rear arm.

In such a suspension, said carrier may be supported at an upper portion thereof from the vehicle body via a strut incorporating a cylinder-piston assembly, and said front and rear arms are lower arms connected pivotally with said carrier at a lower portion thereof.

Further, in such a suspension, said carrier may also be supported at an upper portion thereof from the vehicle body via an A-type arm so that a wishbone suspension mechanism is constructed by said front and rear arms and said A-type arm.

## Brief Description of the Drawings

In the accompanying drawings,

Fig. 1 is a diagram illustrating the steering performance of a front steering four wheel vehicle;

Fig. 2 is a diagram illustrating the steering movement of the conventional double joint type steering suspension;

Fig. 3 is a diagram illustrating the steering movement of an embodiment of the double joint type steering suspension according to the present invention;

Fig. 4 is a graph showing the change of the "arm length for drive moment" related with the basic concept of the present invention in a comparison between the present invention and the conventional art;

Fig. 5 is a diagram illustrating the steering movement of another embodiment of the double joint type steering suspension according to the present invention;

Fig. 6 is an elevation view of a practical embodiment of the double joint type steering suspension incorporating the present invention; and

Fig. 7 is an elevation view of another practical embodiment of the double joint type steering suspension incorporating the present invention.

## Description of the Preferred Embodiments

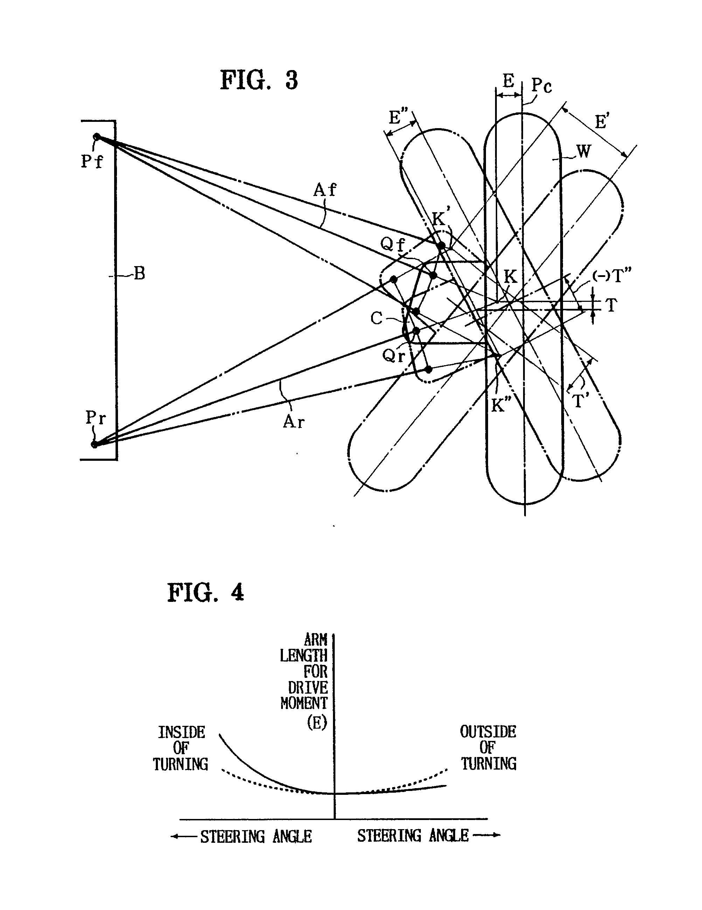

Referring to the diagram of Fig. 3 illustrating the steering movement of an embodiment of the double joint type steering suspension for the front right steering/driving vehicle wheel according to the present invention in a plan view, a combination of a steering/driving vehicle wheel W and a carrier C which rotatably supports the vehicle wheel is shown in a T-shaped outline. The carrier C is supported by a pair of arms, i.e. a front arm Af and a rear arm Ar each of which extends substantially horizontally from an inboard end thereof pivotably connected with a body B of the vehicle by a pivot means Pf or Pr to an outboard end thereof pivotably connected with said carrier C by a pivot means Qf or Qr so as to be closer to one another at said outboard end thereof than at said inboard end thereof so that a longitudinal axis thereof intersects one another on the outboard end side thereof so as to define a king pin point K at the point of intersection. The wheel-carrier combination and the arms Af and Ar shown in solid lines in the diagram are in their positions for the vehicle to run straight forward. In this diagram, the direction of forward running of the vehicle is upward direction. The point K shows the position of the king pin point in the straight forward running condition of the vehicle. As is apparent from this diagram, when the vehicle wheel W is steered to be at the inside of a turning as shown by a dash-dot line in the diagram, the king pin point K shifts to point K', i.e., forward and inboard, while when the vehicle wheel W is steered to be at the outside of a turning as shown by a dash-dot-dot line in the diagram, the ping pin point K shifts to point K", i.e., rearward and inboard. According to such a shifting of the king pin point from the point K to the point K' or K", the caster trail changes from T at the neutral steering to T' at the inside of tuning while it decreases from T to T"(negative) at the outside of turning.

According to such a shifting of the king pin point due to the steering movement of the combination of the vehicle wheel W and the carrier C, as is also noted in the diagram of Fig. 3, the position of the king pin point K relative to the center plane Pc of the vehicle wheel also changes substantially so that the inboard displacement of the king pin point from the center plane of the vehicle wheel, referred to hereinunder as "arm length for drive moment", which is E when the vehicle wheel is at the neutral steering, increases to E' at the inside of turning and to E" at the outside of turning.

When the double joint type steering suspension is constructed in such a normally symmetrical geometry as shown in Fig. 2, said arm length for drive moment changes symmetrically so that it increases in the same manner at both the inside and the outside of turning as the vehicle wheels is more steered from the neutral position. This performance with respect to the change of the arm length for drive moment according to the steering angle in a symmetrical double joint type steering suspension is shown in Fig. 4 by a broken line, wherein the curve is symmetrical with respect to the ordinate of the graph so that the arm length for drive moment (E) increases at the same rate for the inside of turning and the outside of turning along with increase of the steering angle.

However, when the distance along the longitudinal axis of the front arm Af between the king pin point K and the pivot point of the pivot means Qf for the connection of the outboard end of the front arm Af with the carrier C is smaller than the distance along the longitudinal axis of the rear arm Ar between the king pin point K and the pivot point of the pivot means Qr for the connection of the outboard end of the rear arm Ar with the carrier C when the vehicle wheel is at the neutral position in steering, as shown in Fig. 3, substantially due to a difference between the displacement of the pivot point of Qf at the outboard end of the front arm Af from the central plane Pc of the vehicle wheel and the displacement of the pivot point of Qr at the outboard end of the rear arm Ar from the central plane Pc of the vehicle wheel, so that said former displacement is smaller than said latter displacement, as in the embodiment of Fig. 3, the change of the arm length for drive moment relative to the change of the steering angle becomes remarkably different for the inside of turning and for the outside of turning, as shown in Fig. 4 by a curve of a solid line, so that the arm length for drive moment increases much more at the inside of turning than at the outside of turning along with increase of the steering angle.

Thus, such a greater arm length for drive moment at the inside of turning generates, when the vehicle wheel is acting as a driving vehicle wheel, a correspondingly greater moment in the vehicle wheel than at the outside of turning, thereby generating a balance of moment in the two steering/driving vehicle wheels which biases the steering system toward the neutral position.

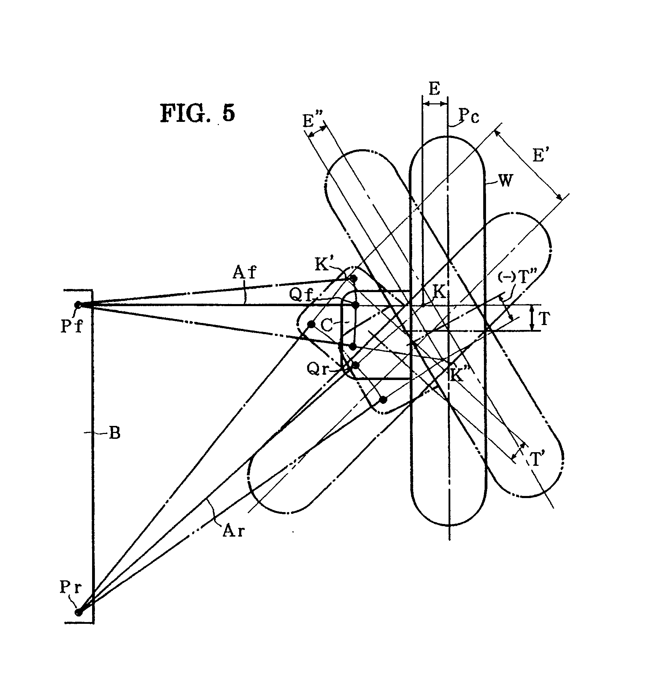

Fig. 5 is a diagrammatical illustration similar to Fig. 3, showing another embodiment of the present invention. In this embodiment, the distance along the longitudinal axis of the front arm Af between the king pin point K and the pivot point of the pivot means Qf for the connection of the outboard end of the front arm Af with the carrier C is smaller than the distance along the longitudinal axis of the rear arm Ar between the king pin point K and the pivot point of the pivot means Qr for the connection of the outboard end of the rear arm Ar with the carrier C when the vehicle wheel is at the neutral position in steering substantially due to a difference between the length of the front arm Af from the inboard end thereof to the outboard end thereof and the length of the rear arm Ar from the inboard end thereof to the outboard end thereof, wherein the length of the front arm Af is smaller than the length of the rear arm Ar. In such a four link geometry of the front and rear arms, the carrier and the vehicle body, the same performance with respect to the change of the arm length for drive moment relative to the steering angle as shown by the solid line in Fig. 4 is also available.

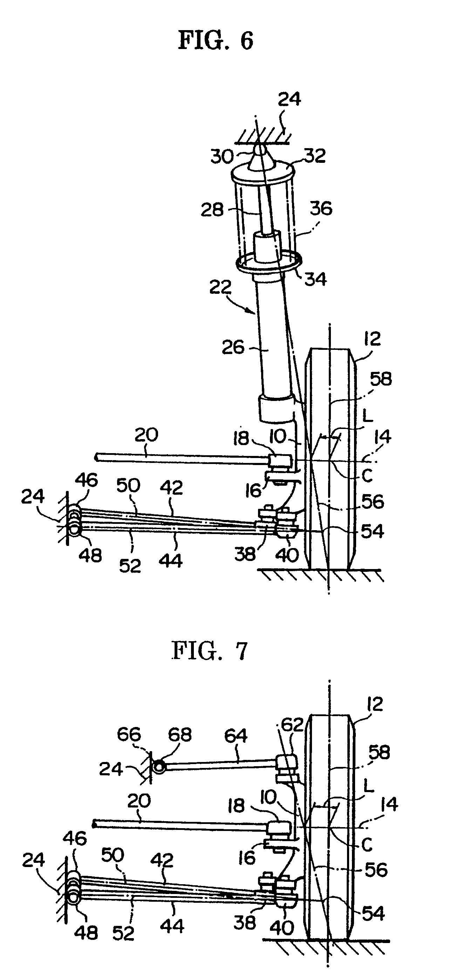

Fig. 6 shows an embodiment of the double joint type steering suspension according to the present invention in a more practical construction In this embodiment, the suspension comprises a carrier 10 which supports a vehicle wheel 12 to be rotatable about an axis 14. The carrier 10 has a knuckle arm 16 at which a tie rod 20 is pivotably connected by a ball joint 18. The carrier 10 is supported relative to the vehicle body 24 by a strut 22 which is a shock absorber having a cylinder 26 firmly connected with the carrier 10 at a lower end portion thereof and a piston 28 pivotably connected with the vehicle body 24 at an upper end of a rod portion thereof via an upper support 30. A spring 36 is mounted between an upper sheet 32 firmly mounted to the upper end of the rod portion of the piston 28 and a lower sheet 34 firmly mounted to the cylinder 26.

A pair of suspension arms 42 and 44 are pivotably connected at outer ends thereof with the carrier 10 at relatively lower portions thereof by means of ball joints 38 and 40 arranged as spaced apart from one another in the longitudinal direction of the vehicle. The suspension arms 42 and 44 are also pivotably connected with the vehicle body 24 at inner ends thereof by means of joints 46 and 48 arranged as spaced apart from one another in the longitudinal direction of the vehicle. It will be appreciated that Fig. 6 corresponds to an elevation view of the suspension of Fig. 3 looked at from the front side of the vehicle. The suspension arms 42 and 44 are arranged to extend substantially horizontally, and although it can not be clearly seen in this elevation view, the two arms are arranged to be closer to one another at the outer ends thereof than at the inner ends thereof so that axes 50 and 52 thereof intersect one another at a point 54 in phantom extensions thereof on the outboard side of the outer ends of the arms. The king pin axis is defined by a straight line 56 which passes through a center of the upper support 30 and the point of intersection 54. A horizontal distance L between the center C of the vehicle wheel 12 and the king pin axis 56 along the axis 14 of the wheel 12 is the real arm length for drive moment in the three dimensional real construction of the suspension.

Fig. 7 shows another embodiment of the double joint type steering suspension according to the present invention in the same manner as Fig. 6. In Fig. 7, the components corresponding to those shown in Fig. 6 are designated by the same reference numerals. However, a shock absorber and a suspension spring similar to those in Fig. 6 are omitted from Fig. 7 to avoid redundancy of illustration. In this embodiment, in addition to the lower arms 42 and 44 arranged in the same manner as in the embodiment shown in Fig. 6, an A-type arm 64 is pivotably connected at an outer end thereof with an upper portion of the carrier 10 via a ball joint 62 and is also pivotably connected at an inner end thereof with the body 24 via two ball joints 66 and 68 so as to provide a double wishbone type suspension.

It will be apparent that if the lower arms 42 and 44 in this double wishbone type suspension are constructed as described above so that the front arm 42 is substantially shorter than the rear arm 44, the same balancing of the moments is accomplished with respect to the steering performance.

Although the present invention has been described in detail with respect to some preferred embodiments thereof, it will be understood by those skilled in the art that various changes or modifications are possible without departing from the scope of the present invention.

A double joint type suspension for a pair of steering/driving vehicle wheels in a four wheel vehicle wherein a carrier for rotatably supporting the vehicle wheel is supported by a front arm and a rear arm each extending substantially horizontally from an inboard end thereof pivotably connected with a body of the vehicle so as to be pivotable forward and rearward relative to the vehicle body up to an outboard end thereof pivotably connected with the carrier so as to be pivotable forward and rearward relative to the carrier, the front and rear arms extending so as to be closer to one another at the outboard end thereof than at said inboard end thereof so that a longitudinal axis thereof intersects one another on the outboard end side thereof so as thereby to define a king pin point at the point of intersection, wherein a four link geometry by the front and rear arms, the carrier and the vehicle body is so arranged that the king pin point shifts more inboard from a central plane of the vehicle wheel at the inside of turning than at the outside of turning for a same increase of steering angle.

## Claims

1. A suspension for a pair of steering/driving vehicle wheels in a four wheel vehicle, comprising a pair of double joint type steering suspensions each including a carrier for rotatably supporting one of said pair of vehicle wheels, a front arm and a rear arm, said front and rear arms each extending substantially horizontally from an inboard end thereof pivotably connected with a body of the vehicle so as to be pivotable forward and rearward relative to said vehicle body up to an outboard end thereof pivotably connected with said carrier so as to be pivotable forward and rearward relative to said carrier, said front and rear arms in each said pair extending so as to be closer to one another at said outboard end thereof than at said inboard end thereof so that a longitudinal axis thereof intersects one another on the outboard end side thereof so as thereby to define a king pin point at the point of intersection, wherein a four link geometry by said front and rear arms, said carrier and said vehicle body is so arranged that said king pin point shifts more inboard from a central plane of said vehicle wheel at the inside of turning than at the outside of turning for a same increase of steering angle.

2. A suspension according to claim 1, wherein the distance along the longitudinal axis of said front arm between said king pin point and a point of pivoting in said connection of said outboard end of said front arm with said carrier is smaller than the distance along the longitudinal axis of said rear arm between said king pin point and a point of pivoting in said connection of said outboard end of said rear arm with said carrier when the vehicle wheel is at a neutral position in steering.

3. A suspension according to claim 2, wherein the difference between said two distances is substantially due to a difference between a first displacement of said pivot point of said outboard end of said front arm from said central plane of the vehicle wheel and a second displacement of said pivot point of said outboard end of said rear arm from said central plane of the vehicle wheel, said first displacement being smaller than said second displacement.

4. A suspension according to claim 2, wherein the difference in said two distances is substantially due to a difference between a length of said front arm from said inboard end thereof to said outboard end thereof and a length of said rear arm from said inboard end thereof to said outboard end thereof, said length of said front arm being smaller than said length of said rear arm.

5. A suspension according to any one of claim 1-4, wherein said carrier is supported at an upper portion thereof from said vehicle body via a strut incorporating a cylinder-piston assembly, and said front and rear arms are lower arms connected pivotably with said carrier at a lower portion thereof.

6. A suspension according to claim 5, wherein said carrier is further supported at an upper portion thereof from said vehicle body via an A-type arm so that a double wishbone suspension mechanism is constructed by said front and rear arms and said A-type arm.

# FIG. 1

# FIG. 2

8

## FIG. 3

## FIG. 4

9

FIG. 5

## FIG. 6

## FIG. 7